# EUROPEAN PATENT APPLICATION

(11) **EP 1 986 355 A1**
(43) Date of publication of application: **29.10.2008**
(21) Application number: 07300984.7
(22) Date of filing: 25.04.2007
(51) Int. Cl.: H04B 10/20

(54) **Method for maintaining the compatibility of legacy receivers, optical distributing network structure and parts thereof including a method for using such a part**

(71) Applicant: Alcatel Lucent, 75008 Paris (FR)
(72) Inventor: Krimmel, Heinz-Georg, 70825 Korntal-Münchingen (DE); Pfeiffer, Thomas, Dr., 70569 Stuttgart (DE); Jentsch, Lothar, 15370 Fredersdorf (DE)
(74) Representative: Brose, Gerhard

(57) **Abstract**

The invention relates to a method for maintaining the compatibility of legacy receivers in network termination units (ONTl) of an optical distributing network structure, especially in a passive optical network, when in the distributing network structure advanced receivers with a multiple of the data rate of the legacy receivers shall be operated too, in which signals for the advanced receivers are transmitted on the same wavelength and using the same physical paths as signals for the legacy receivers, that while transmitting signals for the advanced receivers at the same time also signals for the legacy receivers are transmitted, and that the amplitude of the signals for the advanced receivers compared to the amplitude of the signals for the legacy receivers are chosen such that the signals for the advanced receivers do not block the legacy receivers in the receipt of the signals intended for them. It further relates to an optical distributing network structure, and parts thereof including a method for using such part.

## Description

The invention relates to a method for maintaining the compatibility of legacy receivers according to the preamble of claim 1, to an optical distributing network according to the preamble of claim 2, to a central station according to the preamble of claim 3, to a method for receiving signals according to the preamble of claim 5, to a receiver according to the preamble of claim 6, and to a network termination.

The invention starts from so-called Passive Optical Networks or PONs. These are tree-shaped optical access networks with a central station, a distributing network structure and a number of subscriber stations. At the subscriber's ends the equipment is divided into an optical network termination under the responsibility and control of the network provider and the terminal equipment under the responsibility and control of the subscriber.

The number of subscriber stations per central station reaches from some tens to tens of thousands.

Actual developments tend to such networks, which also include optical amplifiers or regenerators, i.e. active elements. Nevertheless, at least at the moment, their name still includes the term "passive".

While those networks at the moment work with data ranges of about 1 Gbps, a next generation is being planned with data ranges of about 10 Gbps. In such plans a backward compatibility is asked for, meaning that legacy equipment working with the lower data ranges may remain in the network, when advanced equipment working with the higher data ranges are put into operation within the same network. This is of major relevance to the subscriber sided equipment.

The (upstream) transmit sides of such equipment work independent from one another and are not influenced. Backward compatibility thus is only of influence to the downlink paths.

So, as far as capacity suffices, the uplink direction needs not be changed; changes only concern the receive part of the subscriber sided equipment.

In "Backward Compatibility" submitted by Keiji Tanaka to the IEEE802.3 interim meeting, Austin, May 24-25, 2006, some "Upgrade Methodologies" are presented:
- An overlay structure with physically separate networks for both generations. That is very uneconomical.
- A wavelength division overlay, where at least the downlink operation uses separate wavelengths for both generations. This may be seen as a waste of wavelengths and, thus, of capacity. It involves the usage of filtering to prevent the new advanced service to reach the legacy receivers to prevent interference.
- Some kind of time division overlay. Here the problem of ongoing synchronization of the legacy receivers arises.

It can be seen, that such a situation may not only arise in the above explicitly named example, but in any case, where in an optical distributing structure an upgrade with backward compatibility is required.

Thus the problem arises to provide a solution for the upgrade of such network or structure with backward compatibility, without the need to change the whole network, to waste capacity or to risk a faulty operation of the legacy receivers.

This problem according to the invention is solved by a method for maintaining the compatibility of legacy receivers according to the teachings of claim 1, to an optical distributing network according to the teachings of claim 2, to a central station according to the teachings of claim 3, to a method for receiving signals according to the teachings of claim 5, to a receiver according to the teachings of claim 6, and to a network termination.

The invention suggests some kind of multiplex of signals with signals for legacy and for advanced receivers being transmitted combined on the same wavelength and using the same physical paths. In order to keep the synchronization in the legacy receivers, their signals must not be interrupted during the sending of signals for the advanced receivers, but run continuously. The amplitudes of both, the signals for the advanced receivers and the signals for the legacy receivers, are chosen such that the signals for the advanced receivers do not block the legacy receivers in the receipt of the signals intended for them, as far as, at least, synchronization is concerned.

Further embodiments of the invention are to be found in the subclaims and in the following description.

In the following the invention will be described with the aid of the enclosed drawings.
- Figure 1: shows an optical distributing network structure according to the invention, where a method according to the invention can be applied, with a central station according to the invention, with a network termination unit according to the invention, including a receiver according to the invention, in which another method according to the invention can be applied.
- Figure 2: shows signals used in a network as shown in figure 1.
- Figure 3: shows an eye-pattern resulting from signals as shown in figure 2.

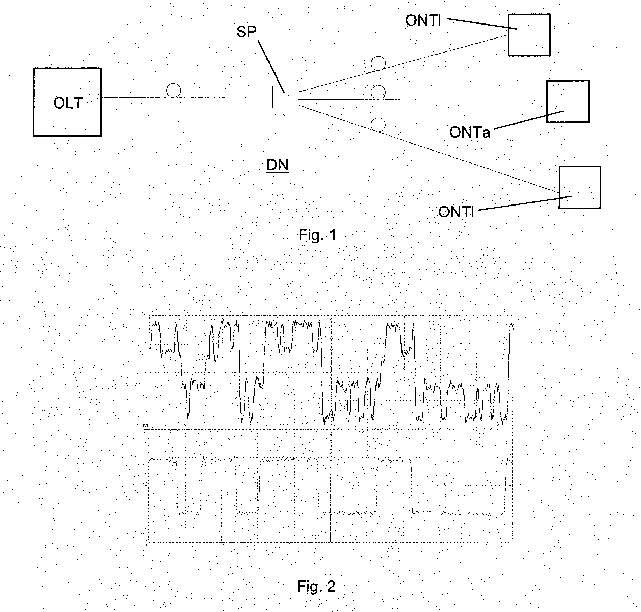

Figure 1 shows an optical distributing network structure according to the invention.

At the left we have a central station, in networks of this kind mostly called optical line termination OLT. This central station is the interface to the worldwide telecommunications network. At the right we see here three commonly called optical network terminations, building the transfer point to the end user equipment, commonly known as terminal equipment. In between we have a passive, here tree-shaped, distributing network DN.

This distributing network DN shows one single splitting point SP representative for a whole couple of splitting points. Normally such distributing network includes not only one splitting point, where the downstream signal path branches, but has lots of such branching point, like a tree has more than one branches and twigs. It was already said, that the number of subscribers can, in principle, reach up to thousands, what means, that the network has to branch to this number of twigs.

With rising number of subscribers in such network the amount of data to be transmitted there also rises. But not only by this, but also by rising demands of the single subscribers. At least those subscribers then are to be provided with a data stream of higher density, that is a higher bit rate.

Such subscribers then are supplied with advanced optical network terminating units ONTa. The others are using conventional or, as they often are called, legacy optical network terminating units ONT1.

As the uplink direction does not influence other optical network terminating units, we need here only to consider the receivers of such units. We call them legacy receivers, and advanced receivers in the following.

As long as the distributing network as such is completely passive, of course there need not be any change. If it contains electrical amplifiers or repeaters, it depends on whether they anyway can cope with such higher data rate or not.

As long as the distributing network as such remains unchanged, the legacy optical network terminating units ONTl necessarily have to remain unaffected by the higher data rates.

The amplitudes necessary for the legacy receivers remaining uninfluenced from the signals for the advanced receivers is easy to be found out by the person skilled in the art:

In order to choose the amplitudes of both, the signals for the advanced receivers and the signals for the legacy receivers, such that the signals for the advanced receivers do not block the legacy receivers in the receipt of the signals intended for them, a minimum demand is, that both types of receivers work well in the absence of the signals for the respective other one.

But of course when both kinds of signals are present simultaneously they at least represent some kind of noise to the respective other receiver. This means that in borderline cases the amplitudes will have to be higher than without the other signal being present.

As long as the mere object of the continued transmitting of signals for the legacy receivers while transmitting signals for the advanced transceivers only is to maintain synchronization of the legacy receivers and not also to transfer a data content, the amplitudes for the legacy signals in borderline cases need only be slightly increased.

When the continued transmitting of signals for the legacy receivers while transmitting signals for the advanced transceivers is also for transferring data and not only for maintaining synchronization, the increase of necessary amplitude is higher.

Help may be the specifications given for the receivers. Some day, when no longer legacy receivers will be inserted in such network, it may also depend from the characteristics of the legacy receivers then used.

Figure 2 shows one example of the waveform of such signals. The lower signal is the signal for the legacy receivers alone.

The upper signal is the overall signal representing the superposition of both, the signal for the legacy receivers, and the signal for the advanced receivers, at least in a schematic representation. The bitrates of both signals here differ by a factor of four.

Here the amplitude of the signals for the advanced receivers is only slightly smaller than that of the signals for the legacy receivers. Nevertheless at least a human viewer can clearly separate both signals. So it really depends only on the actual characteristics or specifications of the legacy receivers, whether they also can separate them, what means here, that they can recognize the signals intended only for them.

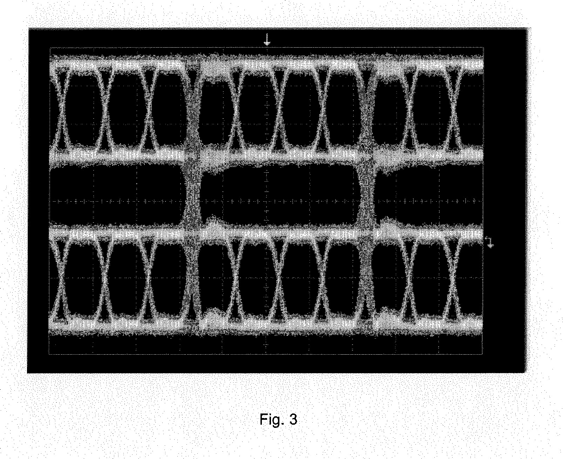

Figure 3 shows an eye-pattern resulting from a signal analog to the upper signal in figure 2.

In this eye-pattern the middle "eyes" are pretty open. These eyes come from the signals for the legacy receivers and obviously could easily be interpreted by the respective receivers. But here we see the eye at the entrance to the network at the central station. At the far end with the legacy receivers the eyes will partly be closed by noise and interpretation may be not such easy. But such considerations are well known to any expert in this field.

The signal as shown in figures 2, and 3 assume that in the central station OLT the signals are jointly built in accordance to their frequency and phase relationship.

A realization by completely separate transmitters including laser or other sources in principle would be possible too. But a synchronization of both signals with respect to one another is strongly recommended and this is easier to achieve when using a single source.

Another possibility would be to take the signals for the legacy receivers into account, when building the signals for the advanced receivers. In developing those network elements dealing with signals for the advanced receivers this of course can be considered.

One possibility would be to code the signals for the advanced receivers with a code that takes into account the signals for the legacy receivers to improve eye pattern opening for the legacy receivers during time intervals when they are served.

Another possible coding could simplify the decoding process for the advanced receivers. Hereto the mark and space coding is inverted with the status of the legacy signal. As result only two amplitude slicing blocks, instead of three are required. The "mark" status of the advanced signal is upright (top) for legacy status "mark", while it is inverted (bottom) for the legacy status "space".

In the last mentioned example the decoding of the signal received at the advanced receivers may be done by mapping. In this situation such receiver easily could use both kinds of signals and thus have a higher capacity.

In the example leading to the eye-signal as shown in figure 3, the advanced receivers can easily work with synchronizing to the upper and lower eyes and to then decode in the usual manner like decoding multi-level signals.

Also without using special coding it would be possible to combine the use of signals for legacy and for advanced receivers to increase overall capacity. Than a two-stage decoding at the receive end could be used, where in a first stage a receiver part acting as legacy receiver would determine its signals as two-stage signals in conventional manner. They than could be subtracted from the overall signal resulting in the signals for the advanced receivers alone remaining. These signal in turn could than be determined as two-stage signals in conventional manner.

Though it may prove not necessary and not in any case even possible, it is highly recommended that the signals for the legacy receivers and the signals for the advanced receivers be synchronized with respect to one another such that possible signal edges for the legacy receivers coincide with possible signal edges for the advanced receivers. Often the higher bitrate is either a power of 2 the lower one or ten times thereof. Than such synchronization is easy to achieve.

## Claims

1. Method for maintaining the compatibility of legacy receivers in network termination units (ONTl) of an optical distributing network structure, especially in a passive optical network, when in the distributing network structure advanced receivers with a multiple of the data rate of the legacy receivers shall be operated too, **characterized in, that** signals for the advanced receivers are transmitted on the same wavelength and using the same physical paths as signals for the legacy receivers, that while transmitting signals for the advanced receivers at the same time also signals for the legacy receivers are transmitted, and that the amplitude of the signals for the advanced receivers compared to the amplitude of the signals for the legacy receivers is chosen such that the signals for the advanced receivers do not block the legacy receivers in the receipt of the signals intended for them.

2. Optical distributing network structure, especially passive optical network, with a central station (OLT), a distributing network (DN) and a plurality of network termination units (ONTl, ONTa), **characterized in, that** it is built such that it works according to the method according to claim 1.

3. Central station (OLT) for an optical distributing network structure, especially passive optical network, **characterized in, that** it is built such that it works according to the method according to claim 1.

4. Method according to claim 1, **characterized in, that** the signals for the advanced receivers and the signals for the legacy receivers are synchronized with respect to one another such that possible signal edges of the signals for the legacy receivers coincide with possible signal edges for the advanced receivers.

5. Method for receiving signals in a network termination unit (ONTa) of an optical distributing network structure, especially in a passive optical network, in which the signals to be received are built according to the method according to claim 1, **characterized in, that** the signals for the advanced receivers are defined taking into account the signals for the legacy receivers.

6. Receiver for a network termination unit of an optical distributing network structure, especially in a passive optical network, for receiving signals that are built according to the method according to claim 1, **characterized in, that** it is built such that it works according to the method according to claim 5.

7. Network termination unit (ONTa) including a receiver according to claim 6.

8. Method according to claim 5, **characterized in, that** the received overall signal is treated as a multi-level signal, in which the signals for the advanced receivers are built by mapping.

9. Method according to claim 5, **characterized in, that** the signals for the legacy receivers are determined in conventional manner and subtracted from the overall signal, for obtaining the signals for the advanced receivers alone, which then in turn are determined in conventional manner.

10. Method according to claim 5, **characterized in, that** the signals for the advanced receivers are separated from the signals for the legacy receivers by means of electrical filters.
